# EUROPEAN PATENT APPLICATION

(11) **EP 4 716 180 A1**
(43) Date of publication of application: **25.03.2026**
(21) Application number: 24830800.9
(22) Date of filing: 26.06.2024
(51) Int. Cl.: H04L 49/201

(54) **DATA PROCESSING METHOD, SWITCHING NODE, AND RELATED SYSTEM**

(30) Priority: 29.06.2023 CN 202310794531; 11.10.2023 CN 202311324100
(71) Applicant: Huawei Technologies Co., Ltd., Shenzhen, Guangdong 518129 (CN)
(72) Inventor: CHEN, Tianxiang, Shenzhen, Guangdong 518129 (CN); XIE, Shanggang, Shenzhen, Guangdong 518129 (CN); XU, Jie, Shenzhen, Guangdong 518129 (CN)
(74) Representative: Pfenning, Meinig & Partner mbB
(86) International application number: PCT/CN2024/101536
(87) International publication number: WO 2025/002161

(57) **Abstract**

This application provides a data processing method, a switch node, and a related system, and is applied to a distributed computing system including a plurality of computing nodes and at least one first switch node. Each first switch node is connected to at least one of the plurality of computing nodes. After receiving control information from a computing node, the first switch node creates a multicast job based on the received control information. The multicast job includes multicast destination information. Then, the first switch node obtains multicast data based on the multicast job, and sends the multicast data to the computing node based on the multicast job. In the distributed computing system, when the plurality of computing nodes execute a service that requires multicast, there is no need to configure related multicast information in advance. Instead, when the multicast is required, a computing node that participates in the multicast sends control information to a switch node, and the switch node creates a multicast job based on the control information to implement the multicast. In this way, a control plane procedure can be simplified when the multicast is implemented, and multicast efficiency can be improved.

## Description

This application claims priority to Chinese Patent Application No. 202310794531.1, filed with the China National Intellectual Property Administration on June 29, 2023, and entitled "DATA MULTICAST METHOD", and to Chinese Patent Application No. 202311324100.5, filed with the China National Intellectual Property Administration on October 11, 2023, and entitled "DATA PROCESSING METHOD, SWITCH NODE, AND RELATED SYSTEM", which are incorporated herein by reference in their entireties.

### TECHNICAL FIELD

This application relates to the field of computer technologies, and in particular, to a data processing method, a switch node, and a related system.

### BACKGROUND

As a scale of job computing in a high performance computing (High Performance Computing, HPC) scenario increases, a proportion of multi-node communication, especially broadcast (broadcast), multicast (multicast), and the like, in HPC application increases significantly. For example, in a high-performance Linpack (High-Performance Linpack, HPL) benchmark (benchmark) test, main communication is multicast, and a data amount of each time of multicast is huge. Therefore, how to implement multicast between a plurality of nodes is an urgent technical problem to be resolved in an HPC job.

### SUMMARY

This application provides a data processing method, a switch node, and a related system, to simplify a control plane procedure when multicast needs to be implemented in a distributed system, and improve multicast efficiency.

According to a first aspect, this application provides a data processing method, applied to a distributed computing system including a plurality of computing nodes and at least one first switch node, where each first switch node is connected to a part or all of the plurality of computing nodes. In a process in which the distributed computing system executes a service, the first switch node receives control information sent by at least one computing node, where each piece of control information includes an indication field indicating that the computing node that sends the control information is a multicast source or a multicast destination. After receiving the control information, the first switch node creates a multicast job based on the received control information, where the multicast job includes multicast destination information, and the multicast destination information indicates destination information of multicast data that needs to be sent in the multicast job. Then, the first switch node obtains the multicast data, and sends the multicast data to the computing node based on the multicast job.

**In** the distributed computing system, when the plurality of computing nodes execute a service that requires multicast, there is no need to configure related multicast information in advance. Instead, when the multicast is required in a process of executing the service, a computing node that participates in the multicast sends control information to a switch node, and the switch node that receives the control information creates a multicast job based on the control information to implement the multicast. In this way, a control plane procedure of the service for which the multicast needs to be implemented can be simplified, and multicast efficiency can be improved.

In a possible implementation, the first switch node is connected to a multicast source, and control information sent by the multicast source further includes address information of the multicast data. Therefore, the multicast job created by the first switch node connected to the multicast source further includes the address information of the multicast data. That the first switch node obtains the multicast data includes: The first switch node sends a data read request to the multicast source based on the address information; and obtains the multicast data from a received read response returned by the multicast source, where the multicast source is one of the plurality of computing nodes, the read response includes the multicast data, and the multicast data is a part or all of data that is to be sent in a multicast manner and that is indicated by the control information sent by the multicast source.

When an amount of data that is to be sent in a multicast manner in the multicast source is large, a buffer capacity for buffering the multicast data in the switch node is limited. Therefore, the switch node reads the data that is to be sent in a multicast manner from the data source by sending the read request to the multicast source, so that the switch node can control a rate of sending the data read request, to control an amount of data transmitted between the switch node and the multicast source and an amount of data transmitted through a port of the switch node, so as to avoid a congestion problem caused by a case in which the switch node cannot process data in a timely manner due to the limited buffer capacity when the multicast source actively sends the data.

In a possible implementation, the distributed computing system further includes a second switch node, and the second switch node is connected to the first switch node. The method further includes: The first switch node sends control information to the second switch node, where the control information sent by the first switch node includes a field indicating whether the first switch node is connected to a multicast source and a field indicating whether the first switch node is connected to a multicast destination. If the control information sent by the first switch node indicates that the first switch node is connected to the multicast source, that the first switch node obtains the multicast data includes: The first switch node receives notification information sent by the second switch node, where the notification information indicates the first switch node to obtain the multicast data from the multicast source; after receiving the notification information, the first switch node sends a data read request to the multicast source based on the address information; and the first switch node receives a read response returned by the multicast source, to obtain the multicast data, where the read response includes the multicast data, and the multicast data is a part or all of data that is to be sent in a multicast manner and that is indicated by the control information sent by the multicast source.

When the distributed computing system includes a plurality of layers of switch nodes, and a second switch node at an upper layer of the first switch node needs to participate in the multicast, the first switch node that creates the multicast job further needs to send control information to the connected second switch node at the upper layer. After receiving the control information sent by the first switch node connected to the multicast source, the second switch node may notify the first switch node to obtain the multicast data from the multicast source, and then the multicast data is sent to the second switch node. The second switch node sends the multicast data to the first switch node that participates in the current multicast. All switch nodes that participate in the current multicast send control information to the second switch node.

In a possible implementation, if the control information sent by the first switch node indicates that the first switch node is not connected to a multicast source, that the first switch node obtains the multicast data includes: The first switch node receives the multicast data sent by the second switch node, where the multicast data is sent to the second switch node by another first switch node connected to a multicast source.

In a possible implementation, the first switch node includes a processing unit and a port, and the plurality of ports form a chain path. In other words, the plurality of ports can exchange data in the chain path.

In a possible implementation, the first switch node includes a processing unit and a plurality of ports. That the first switch node sends the multicast data to the at least one computing node based on the multicast job includes: The processing unit sends the multicast data to a first port in the chain path; if the first port belongs to a target port, after the multicast data is received, the first port duplicates the multicast data to a buffer corresponding to the first port; and the multicast data is sent, through the first port, to a computing node connected to the first port, where the first port is one of the plurality of ports included in the first switch node, and the target port is a port that is required for sending the multicast data and that is indicated by the multicast destination information.

The chain path further includes a path between the processing unit and the first port. The first switch node further includes a crossbar unit (crossbar, xbar), and the processing unit may exchange data with each port through the crossbar unit. The processing unit can send the multicast data to the first port through a chain path between the processing unit and the first port, or send the multicast data to the first port through the crossbar unit.

Each port of the switch node has a buffer. After the multicast data is sent to the port, the port duplicates and buffers the multicast data that needs to be sent. In this way, a case in which a plurality of copies of data are duplicated in the processing unit and then sent to each target port can be avoided, occupation of a main buffer area corresponding to the processing unit can be reduced, to mitigate a congestion problem caused by a case in which the switch node cannot process, in a timely manner, the multicast data obtained from the multicast source because a main buffer is full of data, so as to improve multicast efficiency.

In a possible implementation, after the multicast data is duplicated and buffered, the first port sends one copy of the multicast data to a next port in the chain path through.

In a possible implementation, the processing unit sends the multicast data to the first port in the chain path; and if the first port does not belong to the target port, after the multicast data is received, the first port does not duplicate the multicast data, and the first port directly send the multicast data to a next port in the chain path.

In a possible implementation, the multicast job further includes address information of each multicast destination, and the address information indicates a storage address of the multicast data received by the multicast destination. The method further includes: The processing unit generates a plurality of packet headers based on the multicast job, where each packet header includes a storage address of one multicast destination, and the address information of the multicast destination in each packet header is different; and the processing unit sends the plurality of packet headers to the target port through a crossbar unit, where one target port corresponds to one packet header. That the first port sends the multicast data to a computing node connected to the first port includes: A target packet is obtained through the first port based on a packet header obtained through the first port and the multicast data, and the target packet is sent to the computing node connected to the first port.

In the switch node, data can be sent to each port through two paths, to avoid a case in which all data is sent to the port through one path, so as to further reduce a possibility of congestion in the switch node, and improve multicast efficiency.

In a possible implementation, the first switch node includes one or more chain paths. If the first switch node includes one chain path, the chain path is connected to all ports of the switch node, and the multicast data can reach all ports through the chain path. If the first switch node includes a plurality of chain paths, each of the plurality of chain paths can be connected to a part or all of ports of the switch node.

If the switch node includes a plurality of chain paths, the first switch node can duplicate a plurality of copies of the multicast data, and each copy of the multicast data is sent through one chain path, to reduce duration for the multicast data to reach each port, reduce a delay, and improve multicast efficiency.

In a possible implementation, the packet header includes a first label, and the multicast data includes a second label. That the processing unit sends the multicast data to a first port in the chain path includes: The first port determines, when the first label is the same as the second label, that the first port is the target port.

One switch node may need to process a plurality of different multicast jobs. Labels are carried in the packet header and the multicast data, so that a case in which a multicast destination receives incorrect multicast data because packet headers and multicast data of different multicast jobs are combined can be avoided.

In a possible implementation, control information sent by the multicast destination further includes first quantity information, and the first quantity information indicates a quantity of multicast destinations connected to the first switch node. That the first switch node sends a data read request to the multicast source based on the address information of the multicast data includes: After receiving the control information including the first quantity information indicating the quantity, the first switch node sends the data read request to the multicast source based on the address information of the multicast data.

Because a storage resource of the switch node is limited, the first switch node sends the data read request to the computing node only after determining that control information sent by all computing nodes connected to the first switch node is received. This can avoid a problem that the storage resource is occupied because the multicast data is obtained before all multicast destinations are determined, causing the multicast data that is read first to be buffered for long time.

In a possible implementation, control information sent by the multicast destination further includes first quantity information, and the first quantity information indicates a quantity of multicast destinations connected to the first switch node. That the first switch node sends control information to the second switch node includes: After receiving the control information including the first quantity information indicating the quantity, the first switch node sends the control information to the second switch node.

Because a storage resource of the switch node is limited, the first switch node sends the control information to the second switch node only after determining that control information sent by all computing nodes connected to the first switch node is received. This can prevent the second switch node from starting to process a job corresponding to the control information after one piece of control information is received, to avoid occupation of a resource of the second switch node. In addition, this can avoid a problem that the storage resource is occupied because the second switch node notifies the first switch node to obtain the multicast data before all multicast destinations are determined, causing the multicast data that is read by the first switch node first to be buffered for long time.

In a possible implementation, the control information sent by the first switch node further includes second quantity information, the second quantity information indicates a quantity of first switch nodes connected to the second switch node, and the notification information is sent, after the second switch node receives the control information including the second quantity information indicating the quantity, by the second switch node to the first switch node connected to the multicast source.

Because a storage resource of the switch node is limited, the second switch node notifies, after determining that control information sent by all first switch nodes that participate in the current multicast is received, the first switch node connected to the multicast source to obtain the multicast data. This can avoid a problem that the storage resource is occupied because the second switch node obtains the multicast data before the second switch node determines all the first switch nodes that participate in the current multicast, causing the first obtained multicast data needs to be buffered in the second switch node for long time.

In a possible implementation, the multicast destination information includes port information, and the port information indicates a port through which the first switch node receives the control information sent by the computing node, and indicates that the first switch node needs to send the multicast data through the port indicated by the port information.

The first switch node receives the control information through a specific port, and then needs to send the multicast data through the specific port. Therefore, the port information is recorded, so that the target port can be quickly determined based on the port information.

In a possible implementation, the multicast source or the multicast destination is a central processing unit (Central Processing Unit, CPU), a graphics processing unit (Graphics Processing Unit, GPU), a neural network processing unit (Neural Network Processing Unit, NPU), a tensor processing unit (Tensor Processing Unit, TPU), a dedicated artificial intelligence (Artificial Intelligence, AI) processing chip, or the like, and the switch node may be a switching chip or a switching device having a switching function.

According to a second aspect, this application provides a switch node. The switch node includes a processing unit and a plurality of ports, and the plurality of ports form a chain path; the processing unit is configured to send multicast data to a first port in the chain path, and the first port is one of the plurality of ports; the first port is configured to duplicate the multicast data to a buffer corresponding to the first port, and send the multicast data to a computing node connected to the first port; and the first port belongs to a target port, and the target port includes one or more ports required for sending the multicast data.

Each port of the switch node has a buffer. After the processing unit obtains the multicast data and sends the multicast data to the port, the port duplicates the multicast data and the multicast data that needs to be sent through the port is buffered in a buffer area corresponding to the port. In this way, a case in which a plurality of copies of data are duplicated in the processing unit and then sent to each target port can be avoided, occupation of a main buffer area corresponding to the processing unit can be reduced, to mitigate a congestion problem caused by a case in which the switch node cannot process, in a timely manner, the multicast data obtained from a multicast source because a main buffer is full of data, so as to improve multicast efficiency.

The chain path further includes a path between the processing unit and the first port. The first switch node further includes a crossbar unit, and the processing unit may exchange data with each port through the crossbar unit. The processing unit can send the multicast data to the first port through a chain path between the processing unit and the first port, or send the multicast data to the first port through the crossbar unit.

In a possible implementation, after the multicast data is duplicated and buffered, the first port is further configured to send one copy of the multicast data to a next port in the chain path. In a possible implementation, the processing unit further includes a second port. If the second port does not belong to a target port, the second port is configured to send the multicast data to a next port of the second port in the chain path after obtaining the multicast data.

Each port of the switch node determines whether the received multicast data needs to be sent by the port. When a port determines that the multicast data needs to be sent, the port duplicates the multicast data to a corresponding buffer, and the multicast data is sent to a next port of the port in the chain path through the chain path. The port that receives the multicast data determines whether the port is a target port, to reduce an amount of data processed by the processing unit and improve multicast efficiency.

In a possible implementation, the multicast job further includes address information of each multicast destination, and the multicast destination includes at least one first computing node. The processing unit is further configured to generate a plurality of packet headers based on the multicast job, where each packet header includes address information of one multicast destination, and the address information of the multicast destination in each packet header is different. The processing unit is further configured to send the plurality of packet headers to the target port through a crossbar unit, where one target port corresponds to one packet header. The first port is specifically configured to: obtain a target packet based on a packet header obtained through the first port and the multicast data, and send the target packet to the computing node connected to the first port. In the switch node, data can be sent to each port through two paths, to avoid a case in which all data is sent to the port through one path, so as to further reduce a possibility of congestion in the switch node, and improve multicast efficiency.

In a possible implementation, the first switch node includes one or more chain paths. If the first switch node includes one chain path, the chain path is connected to all ports of the switch node, and the multicast data can reach all ports through the chain path. If the first switch node includes a plurality of chain paths, each of the plurality of chain paths can be connected to a part or all of ports of the switch node.

If the switch node includes a plurality of chain paths, the first switch node can duplicate a plurality of copies of the multicast data, and each copy of the multicast data is sent through one chain path, to reduce duration for the multicast data to reach each port, reduce a delay, and improve multicast efficiency.

In a possible implementation, the packet header includes a first label, and the multicast data includes a second label. The first port is further configured to: compare the first label in the packet header with the second label in the multicast data, and determine, when the first label is the same as the second label, that the first port is the target port.

One switch node may need to process a plurality of different multicast jobs. Labels are carried in the packet header and the multicast data, so that a case in which a multicast destination receives incorrect multicast data because packet headers and multicast data of different multicast jobs are combined can be avoided.

In a possible implementation, the switch node is a switching chip or a switching device having a switching function, and the switch node has a transport layer. Because the switch node has the transport layer, the packet header is sent by using a protocol stack in the processing unit, to ensure data reliability and improve multicast reliability.

According to a third aspect, this application provides a data processing system. The data processing system includes a plurality of computing nodes and at least one first switch node. Each of the at least one first switch node is connected to a part or all of the plurality of computing nodes. Each computing node is configured to perform the operation implemented by the computing node in any one of the first aspect and the possible implementations of the first aspect. Each first switch node is configured to perform the method according to any one of the first aspect and the possible implementations of the first aspect.

According to a fourth aspect, this application provides a computer-readable storage medium. The computer-readable storage medium stores instructions, and when the instructions run on a computing device, the computing device is caused to perform the operation implemented by the computing node in any one of the first aspect and the possible implementations of the first aspect.

According to a fifth aspect, this application provides a computer-readable storage medium. The computer-readable storage medium stores instructions. When the instructions run on a switch node, a computing device is caused to perform the operation implemented by the first switch node in any one of the first aspect and the possible implementations of the first aspect, or perform the operation in any one of the second aspect or the possible implementations of the second aspect.

According to a sixth aspect, this application provides a computer program product. When the computer program product runs on a computing device, the computing device is caused to perform the operation implemented by the computing node in any one of the first aspect and the possible implementations of the first aspect.

According to a seventh aspect, this application provides a computer program product. When the computer program product runs on a device, the computing device is caused to perform the operation implemented by the first switch node in any one of the first aspect and the possible implementations of the first aspect, or perform the operation in any one of the second aspect or the possible implementations of the second aspect.

### BRIEF DESCRIPTION OF DRAWINGS

To describe the technical solutions in embodiments of this application or in the background more clearly, the following briefly describes the accompanying drawings required in embodiments of this application or the background.
FIG. 1 is a diagram of a computing device cluster according to an embodiment of this application;
FIG. 2 is a diagram of a distributed computing system according to an embodiment of this application;
FIG. 3 is a diagram of another distributed computing system according to an embodiment of this application;
FIG. 4 is a schematic flowchart of a data processing method according to an embodiment of this application;
FIG. 5 is a diagram of a structure of a switch node according to an embodiment of this application;
FIG. 6 is a diagram of another data processing method according to an embodiment of this application; and
FIG. 7 is a diagram of a computing device according to an embodiment of this application.

### DESCRIPTION OF EMBODIMENTS

The following describes embodiments of this application with reference to the accompanying drawings in embodiments of this application.

Currently, with development of HPC and artificial intelligence (Artificial Intelligence, AI) technologies, a computing scale of an application is increasing. To resolve a computing problem of large-scale data, distributed computing emerges. In the distributed computing, a plurality of computing nodes process data, and then the plurality of computing nodes exchange the data to finally complete computing. Therefore, a proportion of communication between the plurality of computing nodes in an application is significantly increased. For example, in HPL and HPL-AI benchmark tests for collective communication such as broadcast and multicast, main communication is the multicast, and an amount of data in each time of multicast is very large. Therefore, how to implement the multicast between the plurality of computing nodes is a technical problem that needs to be resolved.

This application provides a distributed computing system and a data processing method applied to the distributed computing system. The distributed computing system includes a plurality of computing nodes and at least one first switch node, and each first switch node is connected to at least one of the plurality of computing nodes. In the distributed computing system, if multicast is required in a process in which the plurality of computing nodes perform computation, the plurality of computing nodes that participate in the computation send control information to a connected switch node, so that the switch node creates a multicast job. The plurality of computing nodes include a multicast source and a multicast destination. The multicast source is a computing node that needs to send data, and the multicast destination is a computing node that receives data sent by the multicast source. The multicast job includes port information, and the port information indicates that the switch node needs to send data to the multicast destination through a port indicated by the port information. After obtaining the data, the switch node sends the data to the multicast destination based on the multicast job.

The following describes in detail the distributed computing system provided in embodiments of this application with reference to the accompanying drawings.

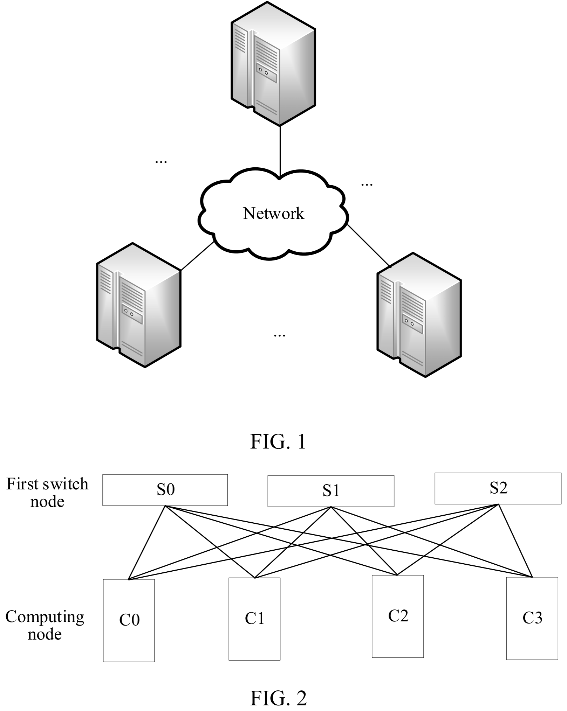

This application provides a computing device cluster. FIG. 1 is a diagram of a computing device cluster according to an embodiment of this application. The computing device cluster includes one or more computing devices. When the computing device cluster includes a plurality of computing devices, the plurality of computing devices are connected to each other via a network. The network may be a carrier network, or may be a network including an optical cable and a data transmission device. This is not specifically limited in embodiments of this application.

The computing device cluster may form a distributed computing system, and each computing device in the cluster may alternatively be independently used as a distributed computing system. FIG. 2 is a diagram of a distributed computing system according to an embodiment of this application. The distributed computing system includes a plurality of computing nodes and at least one first switch (switch) node. Each of the at least one first switch node is connected to at least one of the plurality of computing nodes. As shown in FIG. 2, an example in which the distributed computing system includes four computing nodes (C0 to C3) and three first switch nodes (S0 to S2) is used in FIG. 2, and the four computing nodes and the three first switch nodes are connected in a full-mesh manner.

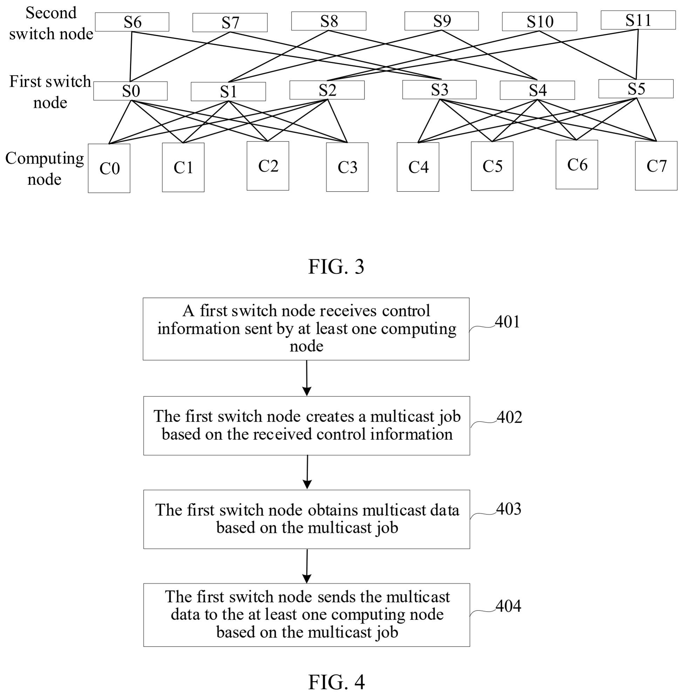

FIG. 3 is a diagram of another distributed computing system according to an embodiment of this application. The distributed computing system includes a plurality of computing nodes, at least one first switch node, and at least one second switch node. Each of the at least one first switch node is connected to at least one of the plurality of computing nodes. Each of the at least one second switch node is connected to a part of the at least one first switch node. As shown in FIG. 3, an example in which the distributed computing system includes eight computing nodes (C0 to C7), six first switch nodes (S0 to S5), and six second switch nodes (S6 to S11) is used in FIG. 3. For a connection relationship between the plurality of computing nodes and the at least one first switch node and a connection relationship between the at least one first switch node and the at least one second switch node, refer to FIG. 3.

In embodiments of this application, the computing node may be a central processing unit (Central Processing Unit, CPU), a graphics processing unit (Graphics Processing Unit, GPU), a neural network processing unit (Neural network Processing Unit, NPU), a tensor processing unit (Tensor Processing Unit, TPU), a dedicated AI processing chip, or the like, and the switch node may be a switching chip, or a switching device having a switching function such as a switch.

It should be understood that FIG. 2 and FIG. 3 show a logical connection relationship between the computing node and the switch node. The plurality of computing nodes may be computing nodes located in a same physical device, or may be computing nodes located in different physical devices. When the plurality of computing nodes are located in a plurality of different physical devices, the plurality of physical devices may be physical devices located in a same cabinet. For example, the computing nodes C0 to C3 shown in FIG. 3 are located in a same server, and the computing nodes C4 to C7 are located in another server. The two servers are located in a same cabinet and are connected through a switch node in the cabinet. When the plurality of computing nodes are computing nodes located in a same physical device, the switch node may be a switching chip in the physical device, or may be a switching device different from the physical device, and the switch node has a transport layer.

It should be understood that the foregoing describes, with reference to FIG. 2 and FIG. 3, only examples of topology structures of the distributed computing system provided in this application, and cannot be understood as a specific limitation. The distributed computing system may alternatively have another topology structure. For example, the distributed computing system may alternatively include more or fewer computing nodes or switch nodes, or include more layers of switch nodes. The connection relationship between the computing node and the switch node and the connection relationship between the at least one first switch node and the at least one second switch node are merely used as an example, and cannot be understood as a specific limitation. There may be another connection relationship between the computing node and the switch node. This is not specifically limited in embodiments of this application.

The following separately describes, by using the systems shown in FIG. 2 and FIG. 3, the data processing method provided in embodiments of this application.

FIG. 4 is a schematic flowchart of a data processing method according to an embodiment of this application. The method includes the following S401 to S404.

S401. A first switch node receives control information sent by at least one computing node.

In this embodiment of this application, the computing node includes a multicast source and a multicast destination. The multicast source is a computing node that needs to send data in a multicast manner in a process of executing a service, and the multicast destination is a computing node that needs to obtain the data that is sent in a multicast manner by the multicast source in the process of executing the service. The data that is sent in a multicast manner by the multicast source is sent to the multicast destination through the first switch node. For a first switch node, at least one computing node connected to the first switch node may include only a multicast source, or may include a multicast source and one or more multicast destinations, or may include one or more multicast destinations.

In the process of executing the service, if the multicast source needs to send data to another computing node, the multicast source sends control information to the connected first switch node, so that the first switch node creates a multicast job based on the control information. In the process of executing the service, if the multicast destination needs to obtain data from the multicast source, the multicast destination sends control information to the connected first switch node, so that the first switch node creates a multicast job based on the control information. After obtaining the data, the first switch node sends the data to the multicast destination based on the multicast job. Both the control information sent by the multicast source and the control information sent by the multicast destination include indication fields, and the indication fields indicate whether the computing node that sends the control information is the multicast source or the multicast destination. For example, if a value of the indication field is 1, it indicates that the computing node that sends the control information is the multicast source; or if a value of the indication field is 0, it indicates that the computing node that sends the control information is the multicast destination.

The following describes the control information sent by the multicast destination and the control information sent by the multicast source.

When the computing node is the multicast destination, in the process of executing the service, if the multicast destination needs to obtain data from the multicast source, for example, an operator is executed, the operator indicates to obtain the data from the multicast source. The multicast destination generates the control information, and sends the control information to the first switch node. The indication field in the control information sent by the multicast destination carries a first identifier, and the first identifier indicates that the computing node that sends the control information is the multicast destination. In this embodiment of this application, for ease of description, the control information that carries the first identifier is referred to as first control information.

In a possible implementation, the first control information may further include other information. The following Table 1 shows fields included in the first control information and meanings indicated by the corresponding fields. In addition to the first identifier carried in the indication field, the first control information may further include any one or more of other fields shown in Table 1. It should be understood that the fields listed in Table 1 are merely used as an example, and the first control information may include more or fewer fields. This is not specifically limited in embodiments of this application.

**Table 1**

| Field | Meaning |
|---|---|
| Job field | Indicates a job |
| Operator field | Indicates a job type of a job executed by a first switch node |
| Data amount field | Indicates a data amount of data that is to be sent in a multicast manner |
| Indication field | Indicates whether control information is sent by a multicast source or a multicast destination |
| Address field | Indicates a storage address of the multicast data received by the multicast destination |
| Quantity field | Indicates a quantity of multicast destinations connected to the first switch node |

The indication fields indicate whether the control information is sent by the multicast source. If the indication field in the control information carries the first identifier, it indicates that the control information is sent by the multicast destination. In other words, the control information is the first control information. If the indication field in the control information carries a second identifier, it indicates that the control information is sent by the multicast source. For example, if the indication field includes one bit, the first identifier may be 0, and the second identifier may be 1. Therefore, if a computing node is a multicast destination, when sending control information, the computing node sets a value of an indication field in the control information to 0, to obtain first control information, and then sends the first control information to a connected first switch node. If a computing node is a multicast source, when sending control information, the computing node sets a value of an indication field in the control information to 1, and then sends the control information to a connected first switch node.

The job field is for carrying a job identity (job identity, job ID), the job identity indicates a job, and one job corresponds to a unique job identity. The first switch node may include a plurality of different jobs to be executed, and different job identities indicate different jobs. For example, a plurality of processes are run on each computing node, and multicast needs to be performed for a plurality of times between processes with a same process identifier on different computing nodes. In this case, different job numbers may be sequentially assigned to different multicast jobs as job identities. The job identity may further include a process identifier and a job number. Job numbers are sequentially assigned to multicast jobs initiated by same processes. Therefore, although process identifiers in job identities corresponding to the multicast jobs initiated by the same processes are the same, the job numbers are different. In multicast jobs initiated by different processes, job numbers in job identities may be the same, but process identifiers are different, so that different multicast jobs are distinguished by using job identities.

For another example, in a plurality of computing nodes connected to a same first switch node, a part of computing nodes are configured to execute a first service, and a part of computing nodes are configured to execute a second service. Computing nodes that execute a same service need to exchange data. The computing nodes that execute the same service are used as a communication domain, and different communication domain identifiers are assigned to different communication domains. In computing nodes that execute different services, there is a computing node that needs to perform multicast through the first switch node. Therefore, the job identity includes a communication domain identifier, a process, and a job number, so that multicast jobs that have a same job number and that are initiated by different communication domains having a same process identifier can be distinguished based on communication domain identifiers.

It should be noted that one switch node can process a plurality of multicast jobs in parallel, and distinguish between different multicast jobs based on different job identities. However, a process in which the first switch node processes any multicast job is the same. Therefore, in this embodiment of this application, an example in which the switch node processes one multicast job is used to describe the data processing method adopted in this embodiment of this application.

It should be understood that if a distributed computing system is configured to execute only one multicast service each time, control information may not include a job field.

The operator field is for carrying an operator identifier, and the operator identifier indicates a type of a job executed by the first switch node. In this embodiment of this application, the job type is a multicast type or a broadcast type.

The data amount field is for carrying a data amount, and the data amount indicates a data amount of data that is to be sent in a multicast manner in the multicast source.

The address field is for carrying address information. For the multicast destination, the address field is for carrying address information of the multicast destination, and the address information of the multicast destination indicates a storage address of the multicast data received by the multicast destination.

The quantity field is for carrying first quantity information, and the first quantity information indicates a quantity of multicast destinations connected to the first switch node that receives the first control information. For example, in the distributed computing system shown in FIG. 2, the multicast source is the computing node C0, and the multicast destination includes the computing node C1 and the computing node C3. Therefore, values of quantity fields in the control information sent by the computing node C1 and the computing node C3 are both 2.

When the computing node is the multicast source, in the process of executing the service, if the multicast source needs to send data in a multicast manner, for example, a multicast operator is executed, the operator indicates that the computing node needs to send the data in a multicast manner, and the multicast source generates control information, and sends the control information to the first switch node. An indication field in the control information sent by the multicast source carries a second identifier, an address field carries address information of data that is to be sent in a multicast manner, the second identifier indicates that the computing node that sends the control information is the multicast source, and the address information indicates a storage address of the data that is to be sent in a multicast manner in the multicast source, for example, a start address of the data that is to be sent in a multicast manner. In this embodiment of this application, for ease of description, the control information that carries the second identifier is referred to as second control information.

In a possible implementation, the second control information may further include other information. The following Table 2 shows fields included in the second control information and meanings indicated by the corresponding fields. In addition to the second identifier carried in the indication field and the address information of the address field, the second control information may further include any one or more of other fields shown in Table 2. For specific meanings of a part of fields in Table 2, refer to the descriptions of meanings of the fields in Table 1. It should be understood that the fields listed in Table 2 are merely used as an example, and the second control information may include more or fewer fields. This is not specifically limited in embodiments of this application.

**Table 2**

| Field | Meaning |
|---|---|
| Job field | Indicates a job |
| Operator field | Indicates a job type of a job executed by a first switch node |
| Data amount field | Indicates a data amount of data that is to be sent in a multicast manner |
| Indication field | Indicates whether control information is sent by a multicast source or a multicast destination |
| Address field | Indicates a storage address of the data that is to be sent in a multicast manner in the multicast source |

S402. The first switch node creates a multicast job based on the received control information.

After receiving control information sent by one computing node, the first switch node creates a multicast job based on the received control information. The multicast job includes at least multicast destination information. The multicast destination information indicates a destination of multicast data sent in the multicast job, or indicates a port through which the first switch node send the multicast data.

After receiving the control information, the first switch node creates different multicast jobs based on job identities in the control information, and after receiving the control information, writes, based on the job identities, information in the control information into the multicast jobs corresponding to the job identities. Methods for creating different multicast jobs by the first switch node are the same. Therefore, in this embodiment of this application, an example in which one multicast job is created is used for description.

The multicast destination information includes port information. The port information indicates a port through which the control information is received; and the port information also indicates a port through which the first switch node sends the multicast data. In other words, the first switch node receives, through a specific port, the control information sent by the multicast destination, and needs to send the obtained multicast data through the port. For example, the first switch node has a bitmap (bitmap) corresponding to a port, and each port corresponds to one bit in the bitmap. After one port of the first switch node receives one piece of first control information, a bit corresponding to the port in the bitmap is set to 1. For example, the first switch node includes five ports. If the bitmap is "00000", it indicates that the first switch node does not receive first control information. If the bitmap is "00110", because a 2^{nd} bit and a 3^{rd} bit in the bitmap are set to 1, it indicates that the first switch node receives first control information through a 2^{nd} port and a 3^{rd} port separately, or it indicates that the first switch node receives first control information through ports with port numbers 2 and 3 separately. For another example, after receiving one piece of first control information, the first switch node creates a port information table for recording an ID of a port through which the first control information is received.

It should be understood that one time of multicast includes a plurality of multicast destinations. Therefore, if one first switch node is connected to a plurality of computing nodes, and all the plurality of computing nodes are multicast destinations, the first switch node receives first control information sent by the plurality of multicast destinations. After receiving one piece of first control information through one port, the first switch node sets a bit corresponding to the port to in the bitmap. In some possible implementations, the first switch node can be connected to one computing node through a plurality of ports. Therefore, in a bitmap corresponding to the ports, one logical port may correspond to one bit, one logical port includes one or more physical ports, and physical ports included in one logical port are connected to a same computing node.

In a possible implementation, the multicast job may further include other information. The following Table 3 shows fields included in the multicast job and meanings indicated by the corresponding fields. In addition to the port information recorded in the port field, the multicast job may further include any one or more of other fields shown in Table 3. For a specific meaning of each field in Table 3, refer to the descriptions of the meaning of each field in Table 1. It should be understood that the fields listed in Table 3 are merely used as an example, and the first control information may include more or fewer fields. For example, there is only one layer of switch node in the distributed computing system shown in FIG. 2, and the multicast job may not include a switch node field. This is not specifically limited in embodiments of this application.

**Table 3**

| Field | Meaning |
|---|---|
| Job field | Indicates a job |
| Data amount field | Indicates a data amount of data that is to be sent in a multicast manner |
| Port field | Indicates a port through which control information is received |
| Destination address field | Indicates a storage address of the multicast data received by the multicast destination |
| Source address field | Indicates a storage address of the data that is to be sent in a multicast manner in a multicast source |
| Source label field | Indicates whether a first switch node is connected to the multicast source |
| Root label field | Indicates whether the first switch node is a root node |
| Switch node field | Indicates an upper-layer switch node connected to the first switch node |

The destination address field is for recording a port ID of a port through which the first control information is received and the address information of the multicast destination carried in the address field in the first control information. After receiving one piece of first control information through one port, the first switch node writes a port ID of the port and address information of a multicast destination carried in an address field in the first control information into the destination address field in the multicast job. In other words, a mapping relationship between the port ID and the address information of the multicast destination is recorded in the destination address field.

The source address field is for recording address information of the data that is to be sent in a multicast manner by the multicast source, and indicates a storage address of the data that is to be sent in a multicast manner in the multicast source. For example, the address information may be a start address of the data that is to be sent in a multicast manner.

The source label field indicates whether the first switch node that creates the multicast job is connected to the multicast source. If the source label field is a third identifier, it indicates that the first switch node is connected to the multicast source. After receiving the control information, the first switch node determines, based on the indication field in the control information, whether the computing node that sends the control information is the multicast source, and if the computing node is the multicast source, sets the source label field to an identifier indicating that the computing node is connected to the multicast source. For example, the source label field includes one bit. When the bit is set to 1, it indicates that the first switch node that creates the multicast job is connected to the multicast source. When the bit is set to 0, it indicates that the first switch node that creates the multicast job is not connected to the multicast source.

The root label indicates whether the switch node that creates the multicast job is a root (root) node of the multicast job. The root node refers to a switch node that does not need to continue to send the multicast data to an upper-layer switch node after the switch node obtains the multicast data during execution of a multicast job. In the distributed computing system shown in FIG. 2, if the switch node S0 receives control information, because S0 is connected to each computing node in the distributed computing system, after obtaining multicast data from a multicast source, the switch node S0 may send the multicast data to each multicast destination. Therefore, the switch node S0 is a root node. In the distributed computing system shown in FIG. 3, if computing nodes that participate in multicast include six nodes C0 to C5, C0 is a multicast source, and other computing nodes are multicast destinations, after obtaining multicast data in C0, S0 further needs to send the data to the switch node S6 or the switch node S7, and S6 or S7 sends the multicast data to S3, and then S3 sends the multicast data to C4 and C5. Therefore, a root node is S6 or S7.

The switch node field is for recording an identifier of an upper-layer switch node connected to the first switch node that creates the multicast job, and indicates the upper-layer switch node connected to the first switch node that creates the multicast job. For example, the distributed computing system shown in FIG. 3 includes two layers of switch nodes. Each first switch node at the first layer is connected to two second switch nodes at the second layer. When creating a multicast job, each first switch node that creates a multicast job records, in a switch node field, identifiers of the two second switch nodes connected to the first switch node. For example, if the first switch node S0 receives the control information to create a multicast job, the first switch node records an ID of the second switch node S6 and an ID of the second switch node S7.

In a possible implementation, the multicast job further includes a source identifier field, and the source identifier field is for recording an ID of the multicast source.

In a possible implementation, the multicast job further includes a destination identifier field, and the destination identifier field is for recording an ID of the computing node that sends the first control information. If the multicast job includes the target identifier field, the multicast destination information further includes the ID of the computing node recorded in the destination identifier field.

After receiving one piece of control information, the first switch node determines, based on the indication field, whether a computing node that sends the control information is a multicast source or a multicast destination. If the computing node is the multicast source, an ID of the computing node is recorded in a source identifier field. If the computing node is the multicast destination, an ID of the computing node is recorded in a destination identifier field. The control information sent by the computing node may carry an ID corresponding to the computing node, and the first switch node obtains the ID of the computing node from the control information. The first switch node may also store a mapping relationship between a port ID and a computing node ID, and the mapping relationship includes a plurality of groups of port identifiers and computing node IDs. A group of port identifiers and computing node IDs indicates that a port corresponding to the port identifier is connected to a computing node indicated by the computing node ID. The first switch node can determine, based on the port through which the control information is received and the mapping relationship, the identifier of the computing node that sends the control information.

It should be noted that after receiving control information sent by any computing node (which may be a multicast source or a multicast destination), the first switch node may start to create a multicast job. After receiving control information sent by another computing node, the first switch node updates the multicast job based on the received control information.

For example, if a first switch node receives control information sent by a computing node, the first switch node creates a multicast job, and obtains, based on the control information, specific content of a job field and a data amount field in the multicast job shown in Table 3. If an indication field in the control information records the first identifier, it indicates that the computing node that sends the control information is the multicast destination. The first switch node writes an address recorded in an address field in the control information into a destination address field in the multicast job, and sets a corresponding bit in the bitmap to 1 based on a port through which the control information is received. The first switch node can further obtain an ID of an upper-layer switch node connected to the first switch node, and write the ID into a switch node field in the multicast job.

If the first switch node receives a 2^{nd} piece of control information, and an indication field in the control information still records the first identifier, the first switch node writes an address recorded in an address field in the control information into a destination address field in a multicast job, and sets a corresponding bit in the bitmap to 1 based on a port through which the control information is received.

If the first switch node receives one piece of control information, and an indication field in the control information records the second identifier, it indicates that a computing node that sends the control information is a multicast source. The first switch node writes an address recorded in an address field in the control information into a source address field in a multicast job, sets a corresponding bit in the bitmap to 1 based on a port through which the control information is received, and sets a source label field to 1.

In a possible implementation, if the first control information sent by the multicast destination includes a quantity field, for a multicast job, after receiving a first quantity of control information that carries the first identifier, the first switch node determines that the multicast job is created. If the first switch node is connected to the multicast source, after receiving the control information sent by the multicast source and the first quantity of control information that carries the first identifier, the first switch node determines that the multicast job is created. It should be understood that, in this embodiment of this application, the receiving a first quantity of control information that carries the first identifier actually means that the first quantity of control information that has a same job identity and that carries the first identifier is received, and the first quantity is a quantity of multicast destinations connected to the first switch node that is indicated by the quantity field.

S403. The first switch node obtains the multicast data based on the multicast job.

If the first switch node is connected to the multicast source, after creating the multicast job, the first switch node obtains the multicast data from the multicast source based on the address information of the data that is to be sent in a multicast manner in the source address field in the multicast job, and sends the obtained multicast data to the at least one computing node.

In a possible implementation, the first switch node sends a data read request to the multicast source to read the data that is to be sent in a multicast manner. The data read request includes a start address and a read length of the data to be read. After receiving a data read request, the multicast source obtains corresponding multicast data based on a start address and a data length in the data read request, and then returns a read response to the first switch node. The read response includes the multicast data obtained based on the data read request. After receiving the returned read response, the first switch node obtains the multicast data in the read response, and sends the multicast data to each multicast destination.

The multicast data read by using the data read request is a part or all of the data that is to be sent in a multicast manner, that is, a part or all of the data indicated by the address field and the data amount field in the control information sent by the multicast source. If only a part of the data that is to be sent in a multicast manner can be read by using one data read request, the first switch node sends a plurality of data read requests to the multicast source to read all of the data that is to be sent in a multicast manner.

For example, the first switch node generates a plurality of data read requests based on a start address, a data amount, and a maximum payload size (Maximum Payload Size, MPS) of the data that is to be sent in a multicast manner. Each data read request includes a start address and a read length, and is for reading a segment of data of the read length starting from the start address. It should be noted that the first switch node may alternatively generate one or more data read requests based on a start address, a data length, and a maximum read request size (Maximum Read Request Size, MRRS). This is not specifically limited in embodiments of this application.

Optionally, if a sum of a total amount of data that is not sent in a multicast manner and a total amount of data to be received is greater than or equal to a buffer capacity, the first switch node can suspend sending the data read request to the multicast source. The total amount of data that is not sent in a multicast manner refers to a total amount of data that has not been sent to the multicast destination, and the total amount of data to be received refers to a total amount of data that can be read by using a data read request that has been sent but for which no read response is received. In this way, congestion between the first switch node and the multicast source is avoided.

In another possible implementation, after creating the multicast job, the first switch node sends notification information to the multicast source. The notification information includes the start address of the data that is to be sent in a multicast manner and the data amount of the data that is to be sent in a multicast manner. After receiving the notification information, the multicast source sends, to the first switch node, the data that is to be sent in a multicast manner.

S404. The first switch node sends the multicast data to the at least one computing node based on the multicast job.

In this embodiment of this application, after obtaining the multicast data, the first switch node needs to send, through a plurality of ports, the multicast data to a multicast destination connected to each port. The following describes a multicast process performed by the first switch node.

After obtaining a read response, the first switch node parses out multicast data from the read response, and transmits the multicast data to a first port P1. P1 is one of the plurality of ports included in the first switch node. Then, the first switch node determines whether P1 is a target port, and if it is determined that P1 belongs to the target port, duplicates the multicast data to a buffer corresponding to the first port, and then sends, through the first port, the multicast data to a computing node connected to the first port. The target port is a port that is required for sending the multicast data and that is indicated by the multicast destination information.

After the first switch node determines whether P1 belongs to the target port, regardless of whether P1 belongs to the target port, the multicast data is sent to a second port P2 through P1, and then the first switch node determines whether P2 belongs to a target port. If it is determined that P2 does not belong to the target port, the multicast data is not duplicated, and the multicast data is sent to a third port P3 through P2.

The first switch node generates a plurality of packet headers based on the multicast job. Each target port corresponds to one packet header, and a destination address in each packet header is different. The destination address in each packet header is address information of a multicast destination, that is, the storage address of the multicast data received by the multicast destination. After obtaining the multicast data, the first switch node determines, based on the multicast destination information, the target port required for sending the multicast data, and then determines, based on the target port and the destination address field in the multicast job, a destination address corresponding to the target port. The first switch node can determine the target port based on port information recorded in the port field in the multicast job, and then determine, based on a port ID and a destination address field of a target port, address information of a multicast destination in control information received through the port, and use the address information as a destination address corresponding to the port, to generate a corresponding packet header. If the multicast job includes the destination identifier field, the first switch node can further determine the target port based on the ID of the computing node and the mapping relationship between the port ID and the ID of the computing node that are recorded in the destination identifier field, then determine, based on a port ID and a destination address field of a target port, address information of a multicast destination in control information received through the port, and use the address information as a destination address corresponding to the port, to generate a corresponding packet header.

For example, if the first switch node determines, based on the multicast destination information, that the multicast data needs to be sent, through P1, to a computing node connected to P1, that is, P1 belongs to a target port, the first switch node determines, based on a port ID of P1 and the destination address field in the multicast job, address information of a multicast destination corresponding to P1, generates a packet header based on the address information, and sends the packet header to P1. If P3 also belongs to a target port, the first switch node determines, based on a port ID of P3 and the destination address field in the multicast job, address information of a multicast destination corresponding to P3, generates a packet header based on the address information, and sends the packet header to P3. For another port that is determined as a target port, a corresponding packet header is generated by using the foregoing same method, and is sent to a corresponding port.

After the multicast data and the corresponding packet header are obtained through each target port, a target packet is obtained based on the obtained packet header and multicast data, and then the target packet is sent to a computing node connected to each target port.

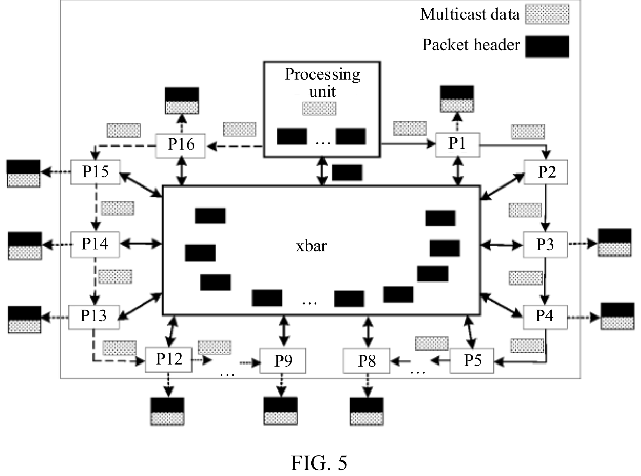

The first switch node includes a processing unit and a plurality of ports. After obtaining the multicast data, the processing unit sends the multicast data to the port, and the processing unit is further configured to generate the plurality of packet headers and send the plurality of packet headers to the target port. With reference to FIG. 5, the following describes how multicast data in a first switch node is sent from a processing unit to a port, how the multicast data is sent from one port to another port, and how a packet header is sent from the processing unit to each target port.

Embodiments of this application further provide a switch node. FIG. 5 is a diagram of a structure of a switch node according to an embodiment of this application. The switch node includes a processing unit and a plurality of ports. In FIG. 5, an example in which 16 ports (P1 to P16) are included is used. The processing unit can communicate with the plurality of ports through different paths, including xbar in the figure and a chain path formed by the ports. The switch node can include one or more chain paths. If the switch node includes one chain path, the chain path is connected to all ports of the switch node, and multicast data can reach all the ports from the processing unit through the chain path. If the switch node includes a plurality of chain paths, each of the plurality of chain paths can be connected to a part or all of ports of the switch node, but ports included in the plurality of chain paths need to cover all the ports of the switch node. In FIG. 5, an example in which a chain path includes two chain paths is used, and the two chain paths are respectively a path connecting the processing unit and the ports P1 to P8 and a path connecting the processing unit and the ports P9 to P16 in the figure.

After obtaining a read response through a port, the switch node transmits the read response to the processing unit through the xbar, and the processing unit parses out multicast data from the read response. The processing unit sends the multicast data through the chain path, and a port through which the multicast data is received determines whether the port is a target port. For example, if the multicast data is received through a first port P1, and P1 determines that P1 belongs to a target port, P1 duplicates the multicast data to a buffer corresponding to P1, and then P1 sends one copy of the multicast data to a computing node connected to P1, and another copy of the multicast data is sent to a next port P2 of P1 in the chain path through the chain path. If P1 determines that P1 does not belong to the target port, P1 does not duplicate the multicast data, and the multicast data is sent to a next port P2 of P1 in the chain path through the chain path. In FIG. 5, an example in which P2 is not a target port is used. In this case, P2 does not duplicate the multicast data, and a target packet is not obtained based on a packet header and the multicast data.

After P2 receives the multicast data, and P2 determines that P2 belongs to a target port, P2 duplicates the multicast data to a buffer corresponding to P2, and then P2 sends one copy of the multicast data to a computing node connected to P2, and the multicast data is sent to a next port P3 of P2 in the chain path through the chain path. If P2 determines that P2 does not belong to a target port, P2 does not duplicate the multicast data, and the multicast data is sent to a next port P3 of P2 in the chain path through the chain path. Operations the same as those performed through P1 and P2 are performed by other ports through which the multicast data is received. Details are not described herein again.

The switch node shown in FIG. 5 includes two paths. After obtaining the multicast data, the processing unit duplicates the multicast data in the processing unit to obtain two copies of the multicast data, and then sends one copy of the multicast data to each path. For example, the processing unit separately sends one copy of the multicast data to P1 and P16, and then the multicast data in each path is transmitted to another connected port through the chain path.

In this embodiment of this application, the processing unit further generates a plurality of packet headers based on a multicast job, and sends a corresponding packet header to each port through the xbar. A destination address in each packet header is address information of a multicast destination, that is, a storage address of the multicast data received by the multicast destination. After obtaining the multicast data, the processing unit determines, based on multicast destination information, a target port required for sending the multicast data, and then determines, based on the target port and a destination address field in the multicast job, a destination address corresponding to the target port. The processing unit can determine the target port based on port information recorded in a port field in the multicast job, and then determine, based on a port ID and a destination address field of a target port, address information of a multicast destination in control information received by the target port, and use the address information as a destination address corresponding to the target port, to generate a corresponding packet header. If the multicast job includes a destination identifier field, the processing unit can further determine the target port based on an ID of the computing node and a mapping relationship between a port ID and the ID of the computing node that are recorded in the destination identifier field, then determine, based on a port ID and a destination address field of a target port, address information of a multicast destination in control information received through the port, and use the address information as a destination address corresponding to the port, to generate a corresponding packet header.

For example, if the processing unit determines, based on the multicast destination information, that the multicast data needs to be sent, through P1, to the computing node connected to P1, that is, P1 belongs to a target port, the processing unit determines, based on a port ID of P1 and the destination address field in the multicast job, address information of a multicast destination corresponding to P1, generates a packet header based on the address information, and sends the packet header to P1 through the xbar. If P3 also belongs to a target port, the processing unit determines, based on a port ID of P3 and the destination address field in the multicast job, address information of a multicast destination corresponding to P3, generates a packet header based on the address information, and sends the packet header to P3 through the xbar. For another port that is determined as a target port, a corresponding packet header is generated by using the foregoing same method, and is sent to a corresponding port.

After each target port determines that the target port is a target port, the multicast data and the received packet header are combined into a target packet, and then the target packet that carries the multicast data is sent to the connected computing node, to implement multicast.

In this embodiment of this application, the packet header sent by the processing unit to each target port carries a first label, and the multicast data sent to each port carries a second label. The first label and the second label may be job identities corresponding to a corresponding multicast job. After a port receives the multicast data, the second label is compared with the first label through the port, and if the second label is the same as the first label, the port determines that the port itself belongs to the target port.

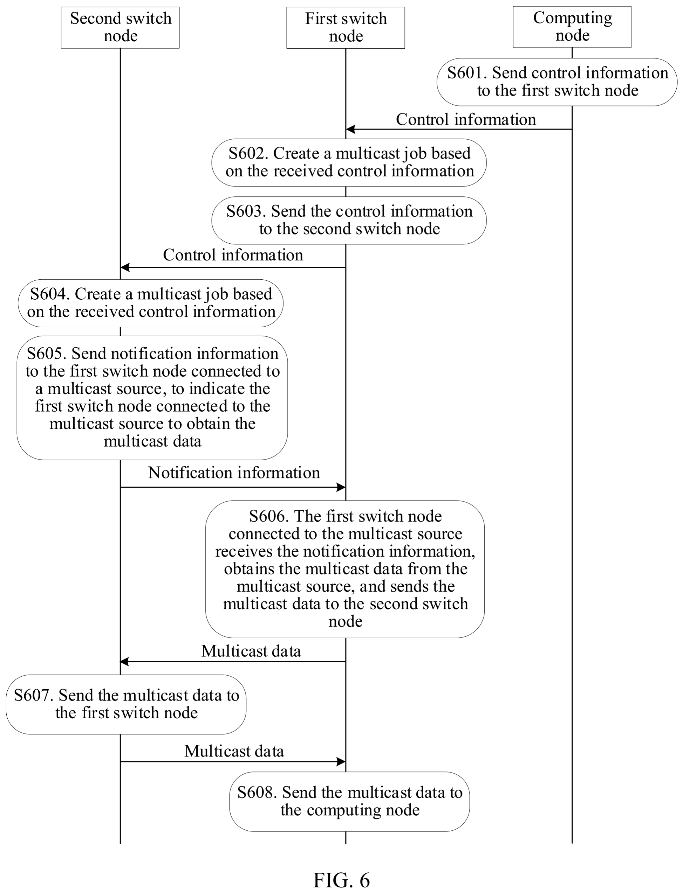

With reference to the accompanying drawings, the data processing method provided in this application is described above when the distributed computing system includes only one layer of switch node. The following describes the data processing method provided in this application when the distributed computing system includes two layers of switch nodes. The distributed computing system shown in FIG. 3 is used as an example. FIG. 6 is a diagram of another data processing method according to an embodiment of this application.

S601. A computing node sends control information to a first switch node.

The computing node includes a multicast source and a multicast destination. In this embodiment of this application, for content included in control information separately sent by the multicast source and the multicast destination to the first switch node, refer to related descriptions in S401. Details are not described herein again.

It should be noted that, if the distributed computing system includes a plurality of layers of switch nodes, a plurality of first switch nodes may need to create multicast jobs for one time of multicast. For example, in the distributed computing system shown in FIG. 3, computing nodes that participate in one time of multicast include eight computing nodes in total: C0 to C7. C0 is a multicast source, and other computing nodes are multicast destinations. If the four computing nodes C0 to C3 send control information to S0, and the four computing nodes C4 to C7 send control information to S3, both S0 and S3 create multicast jobs.

S602. The first switch node creates a multicast job based on the received control information.

For a process in which the first switch node creates the multicast job based on the received control information, refer to the foregoing descriptions in S402. Details are not described herein again.

S603. The first switch node sends the control information to a second switch node.

After creating the multicast job, the first switch node sends the control information to the second switch node connected to the first switch node. The control information sent by the first switch node includes a source indication field and a destination indication field. The source indication field indicates whether the first switch node is connected to a multicast source, and the destination indication field indicates whether the first switch node is connected to a multicast destination. For example, the source indication field and the destination indication field each include one bit. When a value of the source indication field is 1, it indicates that the first switch node is connected to the multicast source. When a value of the source indication field is 0, it indicates that the first switch node is not connected to the multicast source. When a value of the destination indication field is 1, it indicates that the first switch node is connected to the multicast destination. When a value of the destination indication field is 0, it indicates that the first switch node is not connected to the multicast destination. In this embodiment of this application, for ease of description, the control information sent by the first switch node is referred to as third control information.

After creating the multicast job, the first switch node determines, based on the multicast job, whether the first switch node is connected to the multicast source and the multicast destination, and sets the source indication field and the destination indication field in the third control information to corresponding values. For example, if the first switch node is connected to the multicast source and the multicast destination, both the source indication field and the destination indication field are set to 1.

Optionally, the third control information may alternatively indicate, based on only one field, whether the first switch node is connected to the multicast source and the multicast destination. For example, the field includes two bits. When a value of a 1^{st} bit is 1, it indicates that the first switch node is connected to the multicast source. When a value of a 1^{st} bit is 0, it indicates that the first switch node is not connected to the multicast source. When a value of a 1^{st} bit is 1, it indicates that the first switch node is connected to the multicast destination. When a value of a 1^{st} bit is 0, it indicates that the first switch node is not connected to the multicast destination. This is not specifically limited in embodiments of this application.

In a possible implementation, the third control information may further include other information. The following Table 4 shows fields included in the third control information and meanings indicated by the corresponding fields. In addition to the field indicating whether the first switch node is connected to the multicast source and the multicast destination, the third control information may further include any one or more of other fields shown in Table 4. It should be understood that the fields listed in Table 1 are merely used as an example, and the third control information may include more or fewer fields. This is not specifically limited in embodiments of this application.

**Table 4**

| Field | Meaning |
|---|---|
| Job field | Indicates a job |
| Operator field | Indicates a job type of a job executed by a first switch node |
| Data amount field | Indicates a data amount of data that is to be sent in a multicast manner |
| Source indication field | Indicates whether the first switch node is connected to a multicast source |
| Source address field | Indicates a storage address of the data that is to be sent in a multicast manner in the first switch node |
| Destination indication field | Indicates whether the first switch node is connected to a multicast destination |
| Destination address field | Indicates a storage address of the multicast data that is sent by a second switch node and that is received by the first switch node |
| Quantity field | Indicates a quantity of first switch nodes connected to the second switch node |

The source address field in the third control information indicates, when the first switch node is connected to the multicast source, the storage address of the data that is to be sent in a multicast manner and that is obtained by the first switch node. If the second switch node reads, from the first switch node, the data that is to be sent in a multicast manner, the storage address is carried in a data read request sent by the second switch node to the first switch node.

The destination address field in the third control information indicates, when the first switch node is connected to the multicast destination, the storage address of the multicast data that is sent by the second switch node and that is received by the first switch node, and is used when the second switch node writes the multicast data into the first switch node.

The quantity field in the third control information is for carrying a second quantity, and the first quantity indicates a quantity of multicast destinations connected to the first switch node that receives first control information. For example, in the distributed computing system shown in FIG. 3, computing nodes that participate in one time of multicast include eight computing nodes in total: C0 to C7. C0 is the multicast source, and other computing nodes are multicast destinations. If the four computing nodes C0 to C3 send control information to S0, and the four computing nodes C4 to C7 send control information to S3, both S0 and S3 create multicast jobs. After S0 and S3 create multicast jobs, if S0 and S3 choose to send third control information to the second switch node S6, a value of a quantity field in the third control information is 2.

In a possible implementation, the third control information further includes a switch node identifier field for carrying an ID of the first switch node that sends the third control information.

In this embodiment of this application, because the first switch node is further connected to one or more second switch nodes, after creating a multicast job, each first switch node further needs to select a target second switch node that participates in the current multicast job. As described above, after S0 and S3 create the multicast jobs, because S0 and S3 are both connected to S6 and S7, S0 and S3 need to select a same second switch node to complete multicast. In this embodiment of this application, the first switch node can select the target second switch node by using a hash (hash) modulo method. For example, the first switch node uses a job identity as a hash factor to perform a hash operation, performs a modulo operation on n based on a result of the hash operation to obtain a remainder, and selects the target second switch node based on the remainder, where n is a quantity of second switch nodes connected to the first switch node. For example, S0 performs a hash operation by using a job identity as a hash factor, and performs a modulo operation on 2 based on a result of the hash operation to obtain a remainder. If the remainder is 0, S0 chooses to send the third control information to S6; or if the remainder is 1, S0 chooses to send the third control information to S7.

Because job identities in a same time of multicast are the same, results obtained by performing a hash operation on the job identity by different first switch nodes that participate in the same multicast are the same, and remainders are also the same. Therefore, it can be ensured that different first switch nodes that participate in the same multicast can select a same second switch node as the target second switch node, and load balancing can be implemented when there are a plurality of multicast jobs in the distributed computing system.

After determining the target second switch node, the first switch node updates an ID of the switch node recorded in a switch node field in the multicast job, and retains only an ID of the target second switch node.

S604. The second switch node creates a multicast job based on the received control information.

After receiving control information sent by one first switch node, the second switch node creates a multicast job based on the received control information. The multicast job includes at least destination switch node information. The destination switch node information indicates a destination of multicast data sent in the multicast job, or indicates a port through which the second switch node sends multicast data.

After receiving the third control information, the second switch node creates different multicast jobs based on the job identities in the third control information, and after receiving the third control information, writes, based on the job identities, information in the third control information into the multicast jobs corresponding to the job identities. Methods for creating different multicast jobs by the second switch node are the same. Therefore, in this embodiment of this application, an example in which one multicast job is created is used for description.

The destination switch node information includes port information. The port information indicates a port through which the third control information is received; and the port information also indicates a port through which the second switch node sends the multicast data. In other words, the second switch node receives, through a specific port, the third control information sent by the first switch node, and needs to send the obtained multicast data through the port. For example, the second switch node has a bitmap (bitmap) corresponding to a port, and each port corresponds to one bit in the bitmap. After one port of the second switch node receives one piece of third control information, a bit corresponding to the port in the bitmap is set to 1. For example, the second switch node includes four ports. If the bitmap is "0000", it indicates that the second switch node does not receive third control information. If the bitmap is "0011", because a 1^{st} bit and a 2^{nd} bit in the bitmap are set to 1, it indicates that the second switch node receives third control information through a 1^{st} port and a 2^{nd} port separately, or it indicates that the second switch node receives third control information through ports with port numbers 1 and 2 separately. For another example, after receiving one piece of third control information, the second switch node creates a port information table for recording an ID of a port through which the third control information is received.

In a possible implementation, the multicast job may further include other information. The following Table 5 shows fields included in the multicast job created by the second switch node and meanings indicated by the corresponding fields. In addition to the port information recorded in the port field, the multicast job may further include any one or more of other fields shown in Table 5. For a specific meaning of each field in Table 5, refer to the descriptions of the corresponding field in Table 4. In other words, the second switch node also records the fields in Table 4 included in the third control information into the multicast job when creating the multicast job. It should be understood that the fields listed in Table 5 are merely used as an example, and the third control information may include more or fewer fields.

**Table 5**

| Field | Meaning |
|---|---|
| Job field | Indicates a job |
| Data amount field | Indicates a data amount of data that is to be sent in a multicast manner |
| Port field | Indicates a port through which control information is received |
| Source address field | Indicates a storage address of the data that is to be sent in a multicast manner in the first switch node |
| Destination address field | Indicates a storage address of the multicast data that is sent by a second switch node and that is received by the first switch node |

The destination address field is for recording a port ID of a port through which the third control information is received and the storage address carried in the destination address field in the third control information. After receiving one piece of third control information through one port, the second switch node writes a port ID of the port and a storage address in the third control information into a destination address field in a multicast job. In other words, correspondences between a plurality of groups of port IDs and address information of multicast destinations are recorded in the destination address field.

In a possible implementation, the multicast job created by the second switch node further includes a source identifier field, and the source identifier field is for recording an ID of a first switch node connected to the multicast source.

In a possible implementation, the multicast job created by the second switch node further includes a destination identifier field, and the destination identifier field is for recording an ID of a first switch node not connected to the multicast source. If the multicast job includes the target identifier field, the destination switch node information further includes the ID of the first switch node that is recorded in the destination identifier field.

It should be noted that, after receiving third control information sent by any first switch node, the second switch node may start to create a multicast job, and after receiving control information sent by another first switch node, the second switch node updates the multicast job based on the received third control information.

In a possible implementation, if the third control information sent by the first switch node includes a quantity field, for a multicast job, after receiving a second quantity of third control information that carries the quantity field, the second switch node determines that the multicast job is created. The second quantity is a quantity of first switch nodes connected to the second switch node that is indicated by the quantity field in the third control information.

S605. The second switch node sends notification information to the first switch node connected to the multicast source, to indicate the first switch node connected to the multicast source to obtain the multicast data.

After the second switch node receives one piece of third control information, if the source indication field in the third control information indicates that the first switch node that sends the third control information is connected to the multicast source, the second switch node sends the notification information to the first switch node; or after creating the multicast job, the second switch node sends the notification information to the first switch node connected to the multicast source. The notification information indicates the first switch node connected to the multicast source to obtain the multicast data from the multicast source. For example, if the distributed computing system executes only one multicast job each time, the notification information may be a response message for responding to the third control information sent by the first switch node. If the third control information includes the job field, the notification information includes the job identity for indicating the first switch node to obtain the multicast data corresponding to the job identity.

In a possible implementation, if the third control information includes the source address field in Table 4, the notification information may be a data read request, and the data read request carries the storage address recorded in the source address field in the third control information. Optionally, the notification information may further include the job identity.

S606. The first switch node connected to the multicast source receives the notification information, obtains the multicast data from the multicast source, and sends the multicast data to the second switch node.

After receiving the notification information, the first switch node connected to the multicast source obtains the multicast data from the multicast source. For a method for obtaining the multicast data by the first switch node from the multicast source, refer to related descriptions in S403. Details are not described herein again.

If the notification information includes the job identity, the first switch node queries the multicast job based on the job identity, and then obtains the multicast data based on the multicast job and the method in S403. If the notification information is a data read request, and the data read request does not include the job identity, the first switch node searches for the corresponding multicast job based on the storage address in the data read request, and then obtains the multicast data based on the multicast job and the method in S403.

S607. The second switch node sends the multicast data to the first switch node.

After obtaining the multicast data, the second switch node sends the multicast data to the first switch node based on the multicast job created by the second switch node, that is, sends the multicast data to the first switch node that sends the third control information. For a method for sending the multicast data by the second switch node to the first switch node, refer to the method for sending the multicast data by the first switch node to the at least one computing node in S404 and related descriptions in FIG. 5. Details are not described herein again. The second switch node has a same structure as the switch node in FIG. 5.

S608. The first switch node sends the multicast data to the computing node.

The first switch node that receives the multicast data sent by the second switch node sends the received multicast data to the computing node based on the multicast job created by the first switch node. For a method for sending, by the first switch node, the multicast data to the computing node based on the multicast job, refer to related descriptions in S404 and FIG. 5. Details are not described herein again.

It should be understood that the distributed computing systems in FIG. 2 and FIG. 3 are merely examples. The distributed computing system may alternatively have another architecture, for example, may further include three or more layers of switch nodes. A connection relationship between a switch node and a computing node and a connection relationship between switch nodes at different layers may alternatively be implemented in another manner. For a method for implementing multicast or broadcast in a distributed computing system having another architecture, refer to the method in the foregoing embodiments. Details are not described herein again.

For brief description, the foregoing method embodiments are all described as a combination of a series of actions. However, persons skilled in the art should understand that the present invention is not limited to the described action sequence. In addition, persons skilled in the art should also understand that all embodiments described in this specification are preferred embodiments, and the related actions are not necessarily mandatory to the present invention. Another appropriate step combination that persons skilled in the art can think of based on the content described above also falls within the protection scope of the present invention.

Embodiments of this application further provides a data processing system. The data processing system includes the distributed computing system shown in FIG. 2 or FIG. 3. For the distributed computing system, refer to the descriptions and related descriptions corresponding to FIG. 2 or FIG. 3. Details are not described herein again. For operations performed by a computing node and a switch node in the distributed computing system, refer to related descriptions in the foregoing embodiments corresponding to FIG. 4 to FIG. 6. Details are not described herein again.

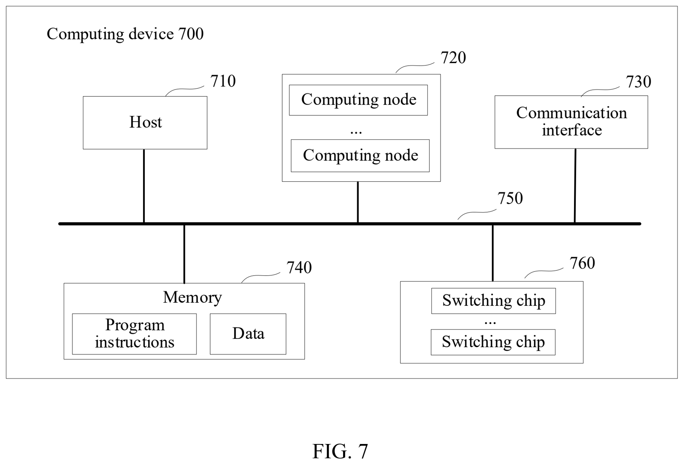

Embodiments of this application further provide a computing device. FIG. 7 is a diagram of a computing device according to an embodiment of this application. The computing device 700 includes a host 710, a plurality of computing nodes 720, a communication interface 730, and a memory 740. The host 710, the plurality of computing nodes 720, the communication interface 730, and the memory 740 are connected to each other via a bus 750.

The host 710 may be a CPU, and the computing node 720 is a CPU, a GPU, an NPU, a TPU, or a dedicated AI processing chip. The host 710 is configured to obtain topology information and the like of a distributed computing system, so that the computing node 720 generates control information. For example, the topology information includes a quantity of computing nodes connected to each first switch node. For operations performed by the computing node 720, refer to the operations performed by the computing node in the foregoing embodiments corresponding to FIG. 4 to FIG. 6. Details are not described herein again.

The communication interface 730 may be a wired interface or a wireless interface, and is configured to communicate with another module or device. The wired interface may be an Ethernet interface, a local interconnect network (local interconnect network, LIN), or the like, and the wireless interface may be a cellular network interface, a wireless local area network interface, or the like.

The memory 740 may be a nonvolatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The memory 740 may alternatively be a volatile memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

The memory 740 may also be configured to store program instructions and data, so that the host 710 invokes the program instructions stored in the memory 740 to perform an operation step of obtaining topology information. In addition, the computing device 700 may include more or fewer components than those shown in FIG. 7, or may have different component configuration manners.

The bus 750 may be a peripheral component interconnect (peripheral component interconnect, PCI) bus, an extended industry standard architecture (extended industry standard architecture, EISA) bus, or the like. The bus 750 may include an address bus, a data bus, a control bus, or the like. For ease of representation, only one bold line is used for representation in FIG. 7, but this does not mean that there is only one bus or only one type of bus.

The computing device 700 may further include the at least one switching chip 760. For an operation performed by the switching chip 760, refer to the operations performed by the first switch node or the second switch node in the foregoing embodiments. Details are not described herein again.

Specifically, for specific implementation of performing various operations by the computing device 700, refer to specific operations performed by the distributed computing system in the foregoing method embodiments. Details are not described herein again.

Embodiments of this application further provide a computer-readable storage medium. The computer-readable storage medium stores instructions. When the instructions are executed, the method steps implemented by the computing node or the switch node in the foregoing method embodiments may be implemented. Details are not described herein again.

In the foregoing embodiments, the descriptions of each embodiment have respective focuses. For a part that is not described in detail in an embodiment, reference may be made to related descriptions in other embodiments.

All or some of the foregoing embodiments may be implemented using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium, or a semiconductor medium. The semiconductor medium may be a solid-state drive.

Steps in the methods in embodiments of this application may be sequentially scheduled, combined, or deleted based on an actual requirement. Modules in the apparatus in embodiments of this application may be divided, combined, or deleted based on an actual requirement.

Embodiments of this application are described above in detail. Although the principles and implementations of this application are described by using specific examples in this specification, the description about the foregoing embodiments is merely provided for ease of understanding of the method and core ideas of this application. In addition, persons of ordinary skill in the art can make variations to this application in terms of the specific implementations and application scopes according to the ideas of this application. Therefore, the content of the specification shall not be construed as a limitation on this application.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A data processing method, applied to a distributed computing system, wherein the distributed computing system comprises a plurality of computing nodes and at least one first switch node, and each of the at least one first switch node is connected to a part or all of the plurality of computing nodes; and the method comprises:
receiving, by the first switch node, control information sent by at least one computing node, wherein each piece of control information comprises an indication field, and the indication field indicates that the computing node that sends the control information is a multicast source or a multicast destination;
creating, by the first switch node, a multicast job based on the received control information, wherein the multicast job comprises multicast destination information, and the multicast destination information indicates a destination of multicast data sent in the multicast job; and
obtaining, by the first switch node, the multicast data, and sending the multicast data to the at least one computing node based on the multicast job.

2. The method according to claim 1, wherein the first switch node is connected to a multicast source, control information sent by the multicast source further comprises address information of the multicast data, the multicast job created by the first switch node comprises the address information of the multicast data, and the multicast source is one of the plurality of computing nodes; and
the obtaining, by the first switch node, the multicast data comprises:
sending, by the first switch node, a data read request to the multicast source based on the address information; and
receiving, by the first switch node, a read response returned by the multicast source, to obtain the multicast data, wherein the read response comprises the multicast data, and the multicast data is a part or all of data that is to be sent in a multicast manner and that is indicated by the control information sent by the multicast source.

3. The method according to claim 1, wherein the distributed computing system further comprises a second switch node, and the second switch node is connected to the first switch node; and the method further comprises:
sending, by the first switch node, control information to the second switch node, wherein the control information sent by the first switch node comprises a field indicating whether the first switch node is connected to a multicast source and a field indicating whether the first switch node is connected to a multicast destination; and
if the control information sent by the first switch node indicates that the first switch node is connected to the multicast source, the obtaining, by the first switch node, the multicast data comprises:
receiving, by the first switch node, notification information sent by the second switch node, wherein the notification information indicates the first switch node to obtain the multicast data from the multicast source;
sending, by the first switch node, a data read request to the multicast source based on address information; and
receiving, by the first switch node, a read response returned by the multicast source, to obtain the multicast data, wherein the read response comprises the multicast data, and the multicast data is a part or all of data that is to be sent in a multicast manner and that is indicated by the control information sent by the multicast source.

4. The method according to claim 1, wherein the distributed computing system further comprises a second switch node, and the second switch node is connected to the first switch node; and the method further comprises:
sending, by the first switch node, control information to the second switch node, wherein the control information sent by the first switch node comprises a field indicating whether the first switch node is connected to a multicast source and a field indicating whether the first switch node is connected to a multicast destination; and
if the control information sent by the first switch node indicates that the first switch node is not connected to the multicast source, the obtaining, by the first switch node, the multicast data comprises:
receiving, by the first switch node, the multicast data sent by the second switch node, wherein the multicast data is sent to the second switch node by another first switch node connected to a multicast source.

5. The method according to any one of claims 2 to 4, wherein the first switch node comprises a processing unit and a plurality of ports, and the plurality of ports form a chain path.

6. The method according to claim 5, wherein the sending the multicast data to the at least one computing node based on the multicast job comprises:
sending, by the processing unit, the multicast data to a first port in the chain path, wherein the first port is one of the plurality of ports;
if the first port belongs to a target port, replicating, by the first port, the multicast data to a buffer corresponding to the first port, wherein the target port is a port that is for sending the multicast data and that is indicated by the multicast destination information; and
sending, by the first port, the multicast data to a computing node connected to the first port.

7. The method according to claim 6, wherein the method further comprises: sending, by the first port, the multicast data to a next port in the chain path.

8. The method according to claim 5, wherein the sending the multicast data to the at least one computing node based on the multicast job comprises:
transmitting, by the processing unit, the multicast data to a first port in the chain path, wherein the first port is one of the plurality of ports; and
if the first port does not belong to a target port, sending, by the first port, the multicast data to a next port in the chain path wherein the target port is a port that is for sending the multicast data and that is indicated by the multicast destination information.

9. The method according to claim 6 or 7, wherein the multicast job further comprises address information of each multicast destination; the method further comprises:
generating, by the processing unit, a plurality of packet headers based on the multicast job, wherein each packet header comprises address information of one multicast destination, and the address information of the multicast destination in each packet header is different; and
sending, by the processing unit, the plurality of packet headers to the target port through a crossbar unit xbar, wherein one target port corresponds to one packet header; and
the sending, by the first port, the multicast data to a computing node connected to the first port comprises:
obtaining, by the first port, a target packet based on a packet header obtained by the first port and the multicast data, and sending the target packet to the computing node connected to the first port.

10. The method according to claim 9, wherein the packet header comprises a first label, and the multicast data comprises a second label; and
the sending, by the processing unit, the multicast data to a first port in the chain path comprises:
determining, by the first port when the first label is the same as the second label, that the first port is the target port.

11. The method according to any one of claims 2 to 10, wherein control information sent by the multicast destination further comprises first quantity information, and the first quantity information indicates a quantity of multicast destinations connected to the first switch node; and
the sending, by the first switch node, a data read request to the multicast source based on the address information comprises:
after receiving the control information comprising the first quantity information indicating the quantity, sending, by the first switch node, the data read request to the multicast source based on the address information of the multicast data.

12. The method according to claim 3, wherein control information sent by the multicast destination further comprises first quantity information, and the first quantity information indicates a quantity of multicast destinations connected to the first switch node; and
the sending, by the first switch node, control information to the second switch node comprises:
after receiving the control information comprising the first quantity information indicating the quantity, sending, by the first switch node, the control information to the second switch node.

13. The method according to claim 12, wherein the control information sent by the first switch node further comprises second quantity information, the second quantity information indicates a quantity of first switch nodes connected to the second switch node, and the notification information is sent, after the second switch node receives the control information comprising the second quantity information indicating the quantity, by the second switch node to the first switch node connected to the multicast source.

14. The method according to any one of claims 1 to 13, wherein the multicast destination information comprises port information, and the port information indicates a port through which the first switch node receives the control information sent by the computing node, and indicates that the first switch node needs to send the multicast data through the port indicated by the port information.

15. The method according to any one of claims 1 to 14, wherein the multicast source or the multicast destination is a central processing unit CPU, a graphics processing unit GPU, a neural network processing unit NPU, a tensor processing unit TPU, or a dedicated artificial intelligence AI processing chip, and the switch node is a switching chip or a switching device having a switching function.

16. A switch node, wherein the switch node comprises a processing unit and a plurality of ports, and the plurality of ports form a chain path;
the processing unit is configured to send multicast data to a first port in the chain path, and the first port is one of the plurality of ports;
the first port is configured to duplicate the multicast data to a buffer corresponding to the first port, the first port belongs to a target port, and the target port comprises one or more ports required for sending the multicast data; and
the first port is further configured to send the multicast data to a computing node connected to the first port.

17. The switch node according to claim 16, wherein
the first port is further configured to send the multicast data to a next port in the chain path.

18. The switch node according to claim 16 or 17, wherein the switch node further comprises a second port; and
the second port is configured to send the multicast data to a next port of the second port in the chain path after obtaining the multicast data, and the second port does not belong to a target port.

19. The switch node according to any one of claims 16 to 18, wherein the multicast job further comprises address information of each multicast destination, and the multicast destination comprises at least one first computing node;
the processing unit is further configured to generate a plurality of packet headers based on the multicast job, wherein each packet header comprises address information of one multicast destination, and the address information in each packet header is different;
the processing unit is further configured to send the plurality of packet headers to the target port through a crossbar unit xbar, wherein one target port corresponds to one packet header; and
the first port is specifically configured to:
obtain a target packet based on a packet header obtained by the first port and the multicast data, and send the target packet to the computing node connected to the first port.

20. The switch node according to claim 19, wherein the packet header comprises a first label, and the multicast data comprises a second label; and
the first port is further configured to determine, when the first label is the same as the second label, that the first port is the target port.

21. The switch node according to any one of claims 16 to 20, wherein the switch node is a switching chip or a switching device having a switching function, and the switch node has a transport layer.

22. A distributed computing system, wherein the data processing system comprises a plurality of computing nodes and at least one first switch node, each of the at least one first switch node is connected to a part or all of the plurality of computing nodes, each computing node is configured to send control information to a first switch node, and the first switch node is configured to perform the method according to any one of claims 1 to 15.
